# EUROPEAN PATENT APPLICATION

(11) **EP 2 080 431 A1**
(43) Date of publication of application: **22.07.2009**
(21) Application number: 08250252.7
(22) Date of filing: 18.01.2008
(51) Int. Cl.: A01G 31/00

(54) **Method of growing plants**

(71) Applicant: Rockwool International A/S, 2640 Hedehusene (DK)
(72) Inventor: The designation of the inventor has not yet been filed
(74) Representative: Samuels, Lucy Alice

(57) **Abstract**

The invention provides a method of propagating seeds, seedlings or cuttings in a mineral wool growth substrate, the method comprising: providing at least one mineral wool growth substrate comprising binder and wetting agent, positioning one or more seeds, seedlings or cuttings for growth in the growth substrate, **characterised in that** the wetting agent comprises ionic surfactant, and in the method the growth substrate is watered at least once per day.

## Description

The invention relates to methods of propagation using a mineral wool growth substrate. In the method, the mineral wool growth substrate comprises a binder, often a hydrophobic binder, to provide structural integrity, and a wetting agent which provides specific water characteristics. The invention also relates to the use of specific types of wetting agent to provide particular characteristics to a mineral wool growth substrate.

It has been well known for many years to propagate seeds, seedlings or cuttings in growth substrates formed from mineral wool. Mineral wool products which are provided as a coherent plug, block, slab or mat generally include a binder, usually an organic binder, in order to provide structural integrity to the product and such binders are commonly hydrophobic once cured. This allows the growth substrate to retain its structure during water irrigation. However, mineral wool products which are to be used as growth substrates must have a capacity to take up and hold water, which is routinely supplied by an irrigation system to the growth substrate, and re-wetting properties to be able to give the grower a range in which he can steer the substrate. Accordingly, it has been well known for some years to include a wetting agent in mineral wool products which are to be used as growth substrates.

One early example of this is GB-A-1336426, which describes readily wettable mineral wool products suitable for use as growth substrates. To provide structure and shape, the fibres contain a binder such a phenol formaldehyde resin or urea formaldehyde resin. To provide the required water handling characteristics the product also contains a wetting agent, in an amount of up to 2% by wt based on the mineral wool. General classes of wetting agents are mentioned, such as anionic and cationic wetting agents, but non-ionic wetting agents are said to be preferred. Examples are alkyl polyglycol ethers such as Triton CF10 and Lissapol N. These are said to be especially valuable where the growth substrate must be subjected to elevated temperatures in order to cure the binder, as they retain adequate wetting properties even after being subjected to temperatures of 200°C or greater. In cases where the wetting agent is not subjected to elevated temperatures, a wider variety of materials is suggested, including lauryl alcohol.

Subsequent publications, and the commercial field itself, have generally followed this preferred approach. For instance, EP-A-889175, DE-A-4208733, WO 92/04824 and DE-A-4024727 all describe systems in which a wetting agent/surfactant is included in the mineral wool growth substrate. In these cases, the nature of the wetting agent is either unspecified or is stated to be a non-ionic material, as in GB-A-1336426. In commercial practice levels of up to 3% non-ionic surfactant, by weight based on the growth substrate, are normally used.

WO93/00797 discloses a growing medium said to be advantageous for improving cultivation control in comparison with sphagnum or peat-based products. According to this publication the growing medium comprises mineral fibres and granulated expanded material secured in a three-dimensional matrix with cured binder. The invention of this publication requires that the growing medium comprises at least 30% granulated dried clay and from 0.01 to 10% by weight binder. It is stated that this combination of materials reduces the risk of over-watering of the growing medium and improves water retention.

This document also indicates that it is advantageous to cure the product so that a cohesive mineral fibre matrix is obtained, preventing the sedimentation and/or washing out of the added particulate materials.

It is also stated that anionic surfactant may also be included in the growing medium but no particular advantage is associated with the inclusion of the anionic surfactant.

Whilst the inclusion of binder and wetting agent as described in GB-A-1336426 is generally very helpful, it has certain problems. The first is that the water handling capabilities of the substrate, although good, show room for improvement. Thus, it would be desirable to provide systems which show improved re-saturation properties (ability of the growth substrate to take up water a second time once it has been wetted and then dried), improved water distribution properties (ability of the growth substrate to hold water at a more uniform concentration throughout the height of the growth substrate rather than concentrating at the base), and water retention properties.

Additionally, one problem which tends to arise with the non-ionic surfactants which have conventionally been used is that they are, during irrigation of the growth substrate, gradually flushed out and lost from the growth substrate rather than being retained in the mineral wool structure. This means that the wettability properties of the growth substrate gradually decrease over time. This can have an impact on, for instance, the re-saturation properties and also on the water handling properties of a substrate which has been in place for a considerable time, and thus on the performance of the rooting in and root development of the plant and crop and of the growing process.

Accordingly, there have been other attempts in the art to deal with the problem of providing a mineral wool growth substrate which contains binder material to provide structural integrity but which also has appropriate wettability properties. Examples include the publications EP-A-889175, DE-A-4208733, WO 92/04824 and DE-A-4024727 mentioned above, as well as CA-A-2301248, WO 97/07664 and WO 99/38372, which address the problem by providing specific binders which can provide both structural and wettability properties. CA-A-2301248 discloses a substrate which additionally comprises surfactant.

These latter two approaches, whilst having advantages, in particular the advantage that the wetting agent is not lost during irrigation, necessitate the use of a rather specific and potentially expensive binder material. Further, there is still room for improvement in their water handling properties.

In particular, it is a constant aim of the growth substrate industry to provide a growth substrate which has improved water distribution over its height and improved re-wetting properties. It is required to achieve a water to air ratio throughout the growth substrate which is as close as possible to optimum. Naturally, when a growth substrate is irrigated with water, there is a tendency for water concentration at the base of the substrate to be higher, and often significantly higher, than water concentration in the top region, purely due to the influence of gravity. A number of approaches have been made in order to address this problem, including, for instance, US 5,009,030, which modifies the nature of the substrate itself throughout the height of the block of mineral wool growth substrate, in order to provide greater water retention in the top regions of the block of mineral wool substrate.

Accordingly, it is still, despite the many years during which the industry has used mineral wool materials as growth substrates, an aim to provide materials which exhibit excellent water distribution properties and water retention properties and excellent re-wetting properties, and which maintain these properties over time, during use, and thus can exhibit excellent re-saturation properties. It is also desirable to achieve this in the context of a product which has good structural integrity and can be made in conventional manner.

There is also the continuing problem of appropriate irrigation methods. In general it is conventional to irrigate mineral wool substrates, especially those of relatively large height, from the top using hoses and drippers. This is necessary to avoid the top of the substrate drying out too much. However, it is generally less convenient to have to provide such systems.

EP-A-1226749 discloses a process for the production of water-absorbing mineral fibre products, which can be used for growing plants. According to this process, during production of the fibres, material is applied to the fibres after formation and before collection, comprising binder, wetting agent and aliphatic polyol. The binder can be a conventional phenol-based resin. The polyol can preferably be ethylene glycol, propylene glycol or trimethylolpropane. The wetting agent can be selected from a long list including salts of higher fatty acids, alkyl or aralkyl sulphates or sulphonates, fatty alcohol sulphates, alkyl phosphates, fatty alcohol ethoxylates, alkyl phenol ethoxylates, fatty amine ethoxylates, fatty acid ethoxylates, alkyl ammonium compounds. Alkyl benzene sulphonate is said to be preferred. No reason is given for this preference.

Particular problems arise when a growth substrate is to be used for propagation. For optimum propagation of the seeds, seedlings, or cuttings being grown, propagators would ideally like to supply water frequently to the substrate. Unfortunately, this has a problem that the growth substrate then becomes too wet and this has a negative effect on the growth of the plants, especially because in periods of low light intensity it can result in a high risk of disease.

Accordingly, it would be desirable to provide a propagation method which alleviates these disadvantages.

According to the invention, in a first aspect we provide a method of propagating seeds, seedlings or cuttings in a mineral wool growth substrate, the method comprising
providing at least one mineral wool growth substrate comprising binder and wetting agent,
positioning one or more seeds, seedlings or cuttings for growth in the growth substrate,
characterised in that
the wetting agent comprises ionic surfactant, and in the method the growth substrate is watered at least once per day.

We find that this particular combination of binder and ionic surfactant, especially linear alkyl benzene sulphonate surfactant, provides a surprisingly effective combination of water handling properties. In particular, water handling properties such as water distribution over height and water retention and rewetting properties are consistently better in all respects than a combination of binder and conventional non-ionic based wetting agent. They are even better in particular respects than the system of the type described in WO 99/38372 which uses a specific hydrophilic binder system.

Particular benefits are seen in water distribution properties, especially in comparison with this type of hydrophilic binder system, which prior to the invention had provided the highest standard of water distribution. Furthermore, the choice of ionic, especially anionic, surfactant, especially linear alkyl benzene sulphonate (LAS), appears to lead to greatly reduced loss of wetting agent during irrigation and consequently reduces foaming during the irrigation process This contrasts with standard non-ionic wetting agents which have a tendency to be flushed out of he product during irrigation. LAS also has the advantage of being aerobically biodegradable in water.

The use of this defined wetting agent also has the advantage that the evaporation rate of water from the substrate is increased. It is believed that the improved water distribution resulting from the use of the defined wetting agent leads to water being spread out more over the fibres, so that the water layer on the fibres is thinner and the evaporation rate is higher. Additionally, since the amount of water in the top part of the substrate is greater than with conventional wetting agents, more water is able to evaporate. This means that it is possible to water the substrate more often without saturating it. As a result, the increased evaporation has the effect that more oxygen can penetrate into the substrate, enabling the roots to develop better and faster.

Further, the use of the wetting agent defined has the advantage that the resaturation rate of the substrate is also greater, meaning that the seeds, seedlings or cuttings can be propagated in a number of different substrate plugs, blocks or slabs on a surface which is not absolutely horizontal, in the knowledge that the different levels will not significantly affect the saturation of each of the substrate.

In the invention the substrate is watered at least once a day. This is unusual in propagation processes, especially during the winter season or periods of low light or low temeprature. With conventional substrates watering is normally not done more than once every three to four days.

In the summer season the invention allows for watering as many as two times, often as many as four times per day, without the substrate becoming too wet or the maximum allowable water content being surpassed.

The use of an ionic surfactant allows for irrigation via the base of the substrate due to the much greater ability of the ionic surfactant to provide a good water distribution over the height of the substrate in comparison with conventional wetting agents. This generally adds convenience and simplicity to the process for the grower, and decreases the risk of the substrate becoming too dry due to suction pressure exerted by for instance a concrete floor.

The growth substrate is formed of mineral wool, which can be glass wool or slag wool but is usually stone wool. In general it can be any of the types of man-made vitreous fibre which are conventionally known for production of growth substrates. Fibre diameter is often in the range 3 to 20 microns, in particular 5 to 10 microns, as conventional.

Density of the block of growth substrate can be up to 200 kg/m³ but is generally in the range 10 to 150 kg/m³, often in the range 30 to 100 kg/m³, preferably in the range 35 to 90 kg/m³. It can be at least 45kg/m3.

The mineral wool growth substrate comprises a binder, usually an organic binder, which is generally heat-curable. The growth substrate is preferably a coherent matrix of mineral fibres connected by cured binder. The invention is particularly valuable when the binder is an organic hydrophobic binder, and in particular when it is a conventional heat-curable (thermosetting), hydrophobic binder of the type which has been used for many years in mineral wool growth substrates (and other mineral wool based products). This has the advantage of convenience and economy. Thus, the binder is preferably a phenol formaldehyde resin or urea formaldehyde resin, in particular phenol urea formaldehyde (PUF) resin. It can be a formaldehyde free binder such as a polyacrylic acid based binder or an epoxy based binder.

The binder is generally present in the mineral wool growth substrate in amounts of from 0.1 to 10% based on the substrate, usually 0.5 to 5%, most preferably 1.5 to 5%.

The mineral wool growth substrate also comprises a wetting agent which is an ionic surfactant.

Preferably it is an anionic surfactant. Suitable anionic surfactants include salts (including, for example, sodium, potassium, ammonium and substituted ammonium salts such as mono-,di-and triethanolamine salts) of the anionic sulphate, sulphonate, carboxylate and sarcosinate surfactants. Other anionic surfactants include isethionates such as the acyl isethionates, N-acyl taurates, fatty acid amines of methyl tauride, alkyl succinates and sulfosuccinates, mono esters of sulfosuccinates, di-esters of sulfosuccinates and N-acyl sarcosinates. Preferred are anionic sulphate surfactants and anionic sulphonate surfactants, anionic carboxylate surfactants and anionic soap surfactants.

Particularly preferred are the anionic sulphonate surfactants such as linear or branched alkyl benzene sulphonates, alkyl ester sulphonates, primary or secondary alkyene sulphonates, olefin sulphonates, sulphonated polycarboxylic acids, alkyl glycerol sulphonates, fatty acyl glycerol sulphonates, fatty oleyl glycerol sulphonates and mixtures thereof.

Most preferably the anionic surfactant is a linear alkyl benzene sulphonate in which the alkyl chain has from 5 to 20 carbon atoms. The sodium and potassium salts are preferred. This type of surfactant provides particularly beneficial water distribution properties for growth substrates of relatively large height and also provides excellent re-saturation properties and does not lead to foaming problems in the irrigation water. Conventional non-ionic surfactants allow the growth substrate to take up water but their water retaining capacity, water distribution over height and re-wetting properties are not as good as with the type of surfactant used in the invention.

Preferably the alkyl chain length is in the range 8 to 16, and more preferably at least 90% of the chains are in the range 10 to 13 and more preferably at least 90% (by weight) are in the range 10 to 12.

Alternatively, the ionic surfactant may be cationic or zwitterionic. Examples of cationic surfactants include quaternary ammonium surfactants. These can, for instance, be selected from mono C6 to mono C16, preferably C6 to C10 N-alkyl or alkenyl ammonium surfactants wherein the remaining N positions are substituted by groups such as methyl, hydroxyethyl and hydroxypropyl.

Suitable zwitterionic surfactants include derivatives of secondary and tertiary amines, derivatives of heterocyclic secondary and tertiary amines, or derivatives of quaternary ammonium, quaternary phosphonium or tertiary sulphonium compounds. Betaine and sultaine surfactants are examples of zwitterionic surfactants.

The ionic surfactant is present in the growth substrate in amounts preferably from 0.01 to 3% (by weight), based on growth substrate, more preferably 0.05 to 1 %, in particular, 0.075 to 0.5%.

Preferably the amount (by weight) of ionic surfactant based on the weight of binder (dry matter) is in the range 0.01 to 5%, preferably 0.5 to 4%.

It is preferred that there is substantially no other wetting agent than the ionic surfactant, and it is particularly preferred that there is substantially no other wetting agent than linear alkyl benzene sulphonate. Thus, levels of such other materials are preferably below 0.1% (by weight) in particular below 0.01%, based on the growth substrate.

The growth substrate may contain other types of conventional additives in addition to binder and wetting agent, for instance salts such as ammonium sulphate and adhesion promoters such as silanes.

In one aspect of the invention the growth substrate has a minimum height of at least 53mm. The height is the vertical dimension when the growth substrate is positioned for use. If the growth substrate has a variable height across its width/length then in this preferred embodiment the minimum height is at least 53mm.

The invention is particularly valuable when the minimum height is at least 60mm. The benefits of the invention are especially noticeable when the height of the substrate is unusually large, especially at least 75mm. Such substrates have proved in the past very difficult to irrigate in a manner whereby there is advantageous distribution of the water over the height and we find surprisingly that the application of the specific type of surfactant required by the invention allows excellent water distribution over the height to be achieved even for such unusually high substrates. Thus the invention is especially useful for the height of at least 80 or at least 85mm and at least 100mm or even at least 120mm. It may be up to 180mm or 300mm.

In the method, plants are positioned in the mineral wool growth substrate for growth. One plant, or more than one, may be positioned in a single unit of mineral wool growth substrate.

For instance, a plant in the propagation phase can be kept for a specified number of days (say 50 days) and its vegetation and roots increase in length. After the propagation phase the plant must be moved into a new situation.

The growth substrate is in the form of a coherent mass. The mineral wool growth substrate may be in any integral form, for instance in the form of small blocks or plugs, larger blocks, or an extensive mat/slab, provided that the height is as required by the first aspect of the invention. Other dimensions may be selected as convenient. The growth substrate is generally a coherent matrix of mineral wool fibres, which has been produced as such, but can be formed by granulating a slab of mineral wool and consolidating the granulated material.

The mass of growth substrate may have a variety of width and length dimensions, as conventional.

During the method the plants are irrigated with water and nutrients. The use of ionic surfactant has the advantage that loss of the wetting agent to the irrigation water is minimal, allowing for a system in which there is essentially no anti foam material in the irrigation water.

In use we find that the mineral wool growth substrate exhibits a particularly desirable distribution of water over height. This distribution can be determined by comparing the water content at the top of the substrate with the water content at the bottom of the substrate. Each of these values are usually expressed as percentages and the difference between them is preferably less than 45%, more preferably less than 35% and in particular less than 30%.

In some cases the water content may be greater at the top of the substrate, such that the water content difference is expressed as a negative number. It can be up to -10% or more.

This means that non-conventional irrigation methods can be used, specifically irrigation can be from the base of the substrate. Thus, tidal irrigation can be used. A growth substrate can be placed for irrigation in a container passing through a gutter. This is also a preferred aspect of the invention.

Alternatively, conventional irrigation methods can be used in the invention, such as top irrigation.

The mineral wool growth substrate can be made in conventional manner. That is, it is made by providing solid mineral raw materials, melting these raw materials to form a melt and forming the melt into fibres, collecting the fibres as a primary web and consolidating the collected fibres. A binder is, conventionally, usually added by spraying on to the fibres after formation but before collection and consolidation. In the invention the binder is usually a curable binder and is normally cured as the consolidated product passes through a curing oven. After this the product is cut into the desired sizes.

Curing is normally in an oven at a temperature of around 200°C or greater, often at least 220°C, for instance in the range of 220 to 275 or up to 290°C. Examples of curing temperatures are 225, 240 and 250°C.

Binder is usually applied to the fibres by spraying of a solution of the binder components in finely divided/atomised form.

The wetting agent is also generally applied to the fibres as an atomised/finely divided spray, usually as a solution or dispersion, but can be in neat form if the wetting agent is itself a liquid.

The wetting agent and binder may be applied to the fibres simultaneously or separately. If they are applied simultaneously, this may be as a result of spraying onto the fibres a single liquid composition which comprises both binder components and wetting agent. Such a composition may, for instance, be produced before transport of the composition to the fibre production facility. Alternatively, the materials may be blended at the fibre production facility. As a further alternative they may be blended in-line just before spraying takes place.

Alternatively, the wetting agent and binder components may be applied separately but simultaneously to the fibres.

In general, application is usually by a spray into the spinning chamber into a cloud of the just-formed fibres. This results in distribution of the wetting agent on the surfaces of the fibres.

One particular advantage of using ionic surfactant, in particular anionic surfactant such as LAS, is that it appears to be stable to the curing conditions to which the growth substrate material is normally subject during production. Thus it can be sprayed onto the fibres together with other additives such as binder. Preferably the ionic surfactant is applied to the fibres after they are formed but before they are collected. This is usually by spraying in the spinning chamber. Alternatively, the ionic surfactant can be applied after the fibres are collected as a primary web and before they are consolidated. It is also possible in some circumstances to apply the ionic surfactant after consolidation but before curing and in some cases the ionic surfactant can be applied even after curing.

The binder usually requires further additives, such as ammonia, ammonium sulphate and silane. These can be added to the binder before transport and storage, or at the fibre production facility before storage, or in-line shortly before spraying on of the binder to the fibres.

It is possible to apply a polyol to the fibres together with the wetting agent, as described in EP-1226749. This polyol, if used, can be blended with the wetting agent before transport and storage, or at the fibre production facility. Preferred polyols are ethylene glycol, propylene glycol, and trimethylol propane, especially ethylene glycol.

## Claims

1. A method of propagating seeds, seedlings or cuttings in a mineral wool growth substrate, the method comprising:
providing at least one mineral wool growth substrate comprising binder and wetting agent,
positioning one or more seeds, seedlings or cuttings for growth in the growth substrate,
**characterised in that**
the wetting agent comprises ionic surfactant, and in the method the growth substrate is watered at least once per day.

2. A method according to claim 1 in which the wetting agent comprises anionic surfactant.

3. A method according to claim 2 in which the wetting agent comprises linear alkyl benzene sulphonate anionic surfactant.

4. A method according to any preceding claim in which the mineral wool growth substrate comprises no wetting agent other than the ionic surfactant.

5. A method according to any preceding claim in which the amount of ionic surfactant is 0.01 to 3%, preferably 0.05 to 0.5% by weight based on weight of the mineral wool growth substrate.

6. A method according to any preceding claim in which the binder is a hydrophobic organic binder.

7. A method according to claim 6 in which the binder is a phenol urea formaldehyde resin binder.

8. A method according to claim 6 in which the binder is a polyacrylic acid based binder.

9. A method according to any preceding claim in which the growth substrate is produced by a process that comprises applying a polyol to the mineral wool fibres.

10. A method according to any preceding claim in which the plants are watered with irrigation water and the irrigation water contains no anti foam material.
